# EUROPÄISCHE PATENTANMELDUNG

(11) **EP 2 157 156 A1**
(43) Veröffentlichungstag der Anmeldung: **24.02.2010**
(21) Anmeldenummer: 08014869.5
(22) Anmeldetag: 21.08.2008
(51) Int. Cl.: C10J 3/48, F01K 23/06, C10K 3/04

(54) **Vergasungseinrichtung für fossilen Brennstoff**

(71) Anmelder: Siemens Aktiengesellschaft, 80333 München (DE)
(72) Erfinder: Graeber, Carsten, 91056 Erlangen (DE)

(57) **Zusammenfassung**

Die Erfindung betrifft eine Vergasungseinrichtung für fossilen Brennstoff umfassend einen Vergaser (3), eine vom Vergaser abzweigende Gasleitung (11) und eine in die Gasleitung geschaltete Rohgasaufbereitung (4), wobei ein Wasser-/Dampfkreislauf zum Zweck des Wärmetauschs in die Rohgasaufbereitung geschaltet ist.

## Beschreibung

Die Erfindung betrifft eine Vergasungseinrichtung für fossilen Brennstoff und eine GuD-Anlage mit vorgeschalteter Vergasungseinrichtung.

Der Weg des Rohgases im GuD-Kraftwerk mit integrierter Vergasung (IGCC="integrated gasification combined cycle") und Kohlendioxid-(CO₂-)Abtrennung umfasst die Rohgaskühlung - je nach Konzept durch Abhitzenutzung zur Dampferzeugung oder Wasserquench - Entstaubung, Venturi-Wäsche (Entfernung von Alkalien, Halogeniden, etc), Wassergas-Shift-Reaktion (auch CO-Shift oder CO-Konvertierung, Verfahren um im Synthesegas den Kohlenmonoxidanteil zu verringern und den Wasserstoffanteil zu erhöhen) und Entschwefelung (Rohgas-Shift). Die Wassergas-Shift-Reaktion kann anwendungsabhängig auch der Entschwefelung nachgeschaltet werden (Reingas-Shift).

Die Wassergas-Shift-Reaktion läuft exotherm ab. Das Gas aus dem ersten Shift-Reaktor hat ein Temperaturniveau, das die Erzeugung von Mitteldruck-(MD-) bzw. Hochdruck-(HD-)Dampf zulässt. Nach der zweiten, optional vorhandenen Konvertierungsstufe muss das konvertierte Rohgas weiter abgekühlt werden, um es anschließend einer Gaswäsche zuzuführen, in der im Wesentlichen die Schwefelverbindung H₂S und Kohlendioxid CO₂ entfernt werden.

Da bei IGCC-Konzepten mit Flugstromvergaser und Wasserquench als erste Gaskühlstufe eine erhebliche Menge der sensiblen Wärme aus der Vergasungsreaktion in latent gebundene Wärme auf relativ niedrigem Temperaturniveau überführt wird, ist es besonders wichtig, optimierte Konzepte der zweiten Gaskühlstufe zu entwickeln. Bei IGCC-Konzepten mit CO₂-Abscheidung kommt dem Wasserquench vorteilhaft entgegen, dass die Wassergas-Shift-Reaktion unter Umsatz von Wasserdampf erfolgt. Da der Wasserdampfanteil durch den Wasserquench bereits ausreichend hoch für die Wassergas-Shift-Reaktion eingestellt werden kann, ist es nicht erforderlich, zusätzlich Dampf dem Rohgasstrom zuzumischen. Allerdings wird nach aktuellem Stand ein deutlicher Wasserdampfüberschuss für die Gleichgewichtsreaktion benötigt, so dass der Wasserdampfanteil nach der letzten CO-Konvertierungsstufe noch sehr hoch ist. Die nachgeschaltete Gaskühlstufe hat die Aufgabe, diese latent gebundene Wärme optimal für den Gesamtprozess zu nutzen.

Um das zu erreichen, wurden eine Vielzahl von Konzepten entwickelt, deren gemeinsames Merkmal darin besteht, die Stoffströme zwischen der Vergasungseinrichtung (Vergaser und Rohgasaufbereitung), der Luftzerlegungsanlage (LZA) und der GuD-Anlage optimal auszutauschen, um einerseits einen hohen Gesamtanlagenwirkungsgrad (z B. durch Überhitzung der erzeugten Sattdampfströme) und zum anderen Kosteneinsparungen (z. B. durch Wegfall der Luftverdichter für die LZA) zu erzielen.

Konkret bedeutet dies, dass die Wasser-/Dampfströme der Vergasungseinrichtung im Wesentlichen mit der GuD-Anlage ausgetauscht werden, d.h. das Speisewasser für die Dampferzeugung in der Rohgasaufbereitung wird in der GuD-Anlage entgast und vorgewärmt, die in der Rohgasaufbereitung erzeugten Sattdampfströme werden dem GuD-Prozess zugeführt, im Abhitzekessel des GuD-Prozesses überhitzt und dann in der vorhandenen Dampfturbine der GuD-Anlage unter Arbeitsverrichtung expandiert. Die wechselseitig ausgetauschten Stoffströme bestimmen dabei signifikant die Auslegung der GuD-Anlage mit einem daraus resultierenden thermodynamischen Nachteil für den Betrieb der GuD-Anlage mit Erdgas. Zum anderen erhöhen die wasser-/dampfseitigen Schnittstellen die Komplexität der Anlage.

Aufgabe der Erfindung ist daher die Angabe einer verbesserten Vergasungseinrichtung für fossilen Brennstoff bzw. einer verbesserten GuD-Anlage mit vorgeschalteter Vergasungseinrichtung für fossilen Brennstoff.

Erfindungsgemäß wird die auf eine Vergasungseinrichtung gerichtete Aufgabe gelöst durch eine Vergasungseinrichtung für fossilen Brennstoff, umfassend einen Vergaser, eine vom Vergaser abzweigende Gasleitung und eine in die Gasleitung geschaltete Rohgasaufbereitung, dadurch gekennzeichnet, dass ein Wasser-/Dampfkreislauf zum Zweck des Wärmetauschs in die Rohgasaufbereitung geschaltet ist.

Die Erfindung beruht demnach auf dem Gedanken einer weitestgehenden Trennung der Wasser-/Dampfkreisläufe von Vergasungseinrichtung und GuD-Anlage. Dazu ist es erforderlich, einen separaten Wasser-/Dampfkreislauf für die Vergasungseinrichtung aufzubauen. Alle prozessbedingten Dampfverbraucher der Vergasungseinrichtung werden von diesem System versorgt.

Vorteilhafterweise ist der Vergaser ein Flugstromvergaser mit Wasserquench. Die CO-Konvertierung in der Wassergas-Shift-Reaktion erfolgt nämlich unter Umsatz von Wasserdampf. Da der Wasserdampfanteil durch den Wasserquench bereits ausreichend hoch für die Konvertierungsreaktion eingestellt werden kann, ist es in der Regel nicht erforderlich, zusätzlich Dampf dem Rohgasstrom zuzumischen.

Vorteilhafterweise umfasst die Vergasungseinrichtung eine Dampfturbine, die in den Wasser-/Dampfkreislauf geschaltet ist. Sie bildet die Hauptkomponente im Wasser-/Dampfkreislauf der Vergasungseinrichtung und kann vorteilhafterweise mit Sattdampf oder überhitztem Dampf betrieben werden.

In einer vorteilhaften Ausgestaltung der Erfindung ist in Strömungsrichtung eines Rohgases hinter einer ersten CO-Konvertierungsstufe ein erster Verdampfer geschaltet. Weiterhin vorteilhaft ist es, wenn hinter einer optionalen zweiten CO-Konvertierungsstufe ein zweiter Verdampfer geschaltet ist.

In einer weiteren vorteilhaften Ausgestaltung der Erfindung ist in Strömungsrichtung eines Rohgases hinter der ersten CO-Konvertierungsstufe und vor dem ersten Verdampfer ein Überhitzer geschaltet, wobei der gesamte erzeugte (MD-)Dampf überhitzt werden sollte.

Zweckmäßigerweise sind der erste und zweite Verdampfer HD- oder MD-Verdampfer. Weiterhin zweckmäßig ist es, wenn der Überhitzer ein HD- oder MD-Überhitzer ist. Sind nur MD-Verdampfer hinter der ersten und der zweiten Shift-Stufe vorgesehen, kann die Dampfturbine möglichst einfach gestaltet sein und teure Materialien und aufwändige Konstruktionen, wie sie bei HD-Verdampfern aufgrund der höheren Belastungen erforderlich sind, können bei den Wärmetauschern vermieden werden.

Zur Verbesserung des Anlagenwirkungsgrades ist in Strömungsrichtung eines Rohgases hinter den ersten Verdampfer ein HD-Speisewasservorwärmer (HD-Economiser, kurz HD-ECO) geschaltet, wenn der erste Verdampfer ein HD-Verdampfer ist.

Vorteilhafterweise ist in Strömungsrichtung eines Rohgases ein MD-Speisewasservorwärmer (ECO) hinter den zweiten Verdampfer bzw. bei nur einer CO-Konvertierungsstufe hinter den ersten Verdampfer geschaltet.

Vorteilhafterweise ist der MD-Speisewasservorwärmer sekundärseitig, in Strömungsrichtung eines Speisewassers, einem vom Speisewasser primärseitig durchströmbaren Brenngasvorwärmer vorgeschaltet, um ein Brenngas mit im MD-Speisewasservorwärmer vorgewärmtem Speisewasser auf eine erforderliche Temperatur aufzuwärmen.

Vorteilhafterweise ist in Strömungsrichtung eines Rohgases ein ND-Verdampfer hinter den MD-Speisewasservorwärmer zur Erzeugung von Sattdampf geschaltet.

Vorteilhafterweise ist in Strömungsrichtung eines Rohgases ein Kreislaufwasserwärmetauscher zum Erwärmen eines Kreislaufwassers primärseitig hinter den ND-Verdampfer und sekundärseitig in einen Wasserkreislauf geschaltet. In diesen Wasserkreislauf können vorteilhafterweise ein Speisewasserwärmetauscher zur Vorwärmung des Speisewassers, ein Quenchwasserwärmetauscher für das Quenchwasser, bestehend aus Gaskondensat und Zusatzwasser (Make-up-Wasser), ein Aufsättigerwasserwärmetauscher für die Vorwärmung des Aufsättigerwassers für die Brenngasaufsättigung und ein Kondensatwärmetauscher geschaltet sein. Der eingeführte Kreislaufwasserwärmetauscher bietet eine kostenoptimierte Lösung zur Einbindung der anfallenden Kondensationswärme des auskondensierenden Wasserdampfanteils im Rohgas bei gleichzeitiger maximaler Nutzung des zur Verfügung stehenden Temperaturniveaus.

Da die Wärmetauscher in der Rohgasaufbereitung aufgrund der Rohgaszusammensetzung höchsten Anforderungen standhalten müssen und weiterhin der Druckverlust im Rohgaspfad möglichst niedrig gehalten werden muss, bietet der gewählte Ansatz einer Wärmeverteilung über einen Zwischenkreislauf den Vorteil ohne zusätzliche Wärmetauscher im Rohgaspfad auszukommen.

Vorteilhafterweise sind der Speisewasserwärmetauscher, der Quenchwasserwärmetauscher und der Aufsättigerwasserwärmetauscher parallel geschaltet. Weiterhin vorteilhaft ist es, wenn der Kondensatwärmetauscher den vorgenannten, parallel geschalteten Wärmetauschern in Strömungsrichtung des Kreislaufwassers nachgeschaltet ist.

Vorteilhafterweise ist in Strömungsrichtung eines Rohgases ein Rohgaskühler hinter den Kreislaufwasserwärmetauscher geschaltet. Der Rohgaskühler kann mit Kühlwasser oder als Direktkontaktkühler mit dem Zusatzwasser für den Wasserquench oder kombiniert betrieben werden.

Die Aufgabe hinsichtlich einer verbesserten GuD-Anlage mit vorgeschalteter Vergasungseinrichtung für fossilen Brennstoff ist mit der Vorrichtung mit den Merkmalen des Anspruchs 18 gelöst. Zweckmäßigerweise sind in die vom Vergaser abzweigende Gasleitung, die in eine Brennkammer eines Gasturbinenkraftwerksteils der GuD-Anlage mündet, Einrichtungen für die Konditionierung und die Vorwärmung des Synthesegases geschaltet.

Die Erfindung setzt konsequent ein IGCC-Konzept mit nichtintegriertem Ansatz (man müsste daher das "I" in "IGCC" streichen) um, welches bestehend aus einem optimierten Erdgas-GuD und einer Vergasungseinrichtung ohne nennenswerten wechselseitigen Stoffstromaustausch (Wasser bzw. Dampf) einen IGCC-Betrieb ohne thermodynamische Nachteile erlaubt. Wesentlich dabei ist, dass beide Anlagenteile (Vergasungseinrichtung und GuD-Anlage) für ihren jeweiligen Betrieb optimiert sind.

Der Erdgas-Betrieb der GuD-Anlage mit dem vorgeschlagenen Konzept ist bei Einsatz von Erdgasbrennern mit höchsten Wirkungsgraden möglich.

Die für den IGCC-Gesamtanlagenwirkungsgrad wichtige Rohgasaufbereitung in der Vergasungseinrichtung wird derart gestaltet, dass alle Wasser-/Dampfströme, die in der Rohgasaufbereitung erzeugt bzw. benötigt werden über einen separaten Wasser-/Dampfkreislauf mit einer Dampfturbine verbunden werden.

Dadurch ist gewährleistet, dass es keinen auslegungsrelevanten Einfluss auf den Wasser-/Dampfkreislauf der GuD-Anlage gibt.

Das vorgeschlagene Konzept einer MD-Dampferzeugung hinter den CO-Konvertierungsreaktoren mit einer optionalen Dampfüberhitzung auf Temperaturen von 350-450 °C ermöglicht dabei den Einsatz von kostenoptimierten Industriedampfturbinen mit freier Wahl der Druckstufe. Die optionale Überhitzung bietet zusätzlich Potenzial, den Gesamtprozess gegenüber den bisherigen wasser-/dampfseitig gekoppelten Konzepten noch weiter zu verbessern. Die Investitionskosten für die zusätzliche Dampfturbine in der Vergasungseinrichtung könnten durch die mögliche Reduzierung auf nur eine ND-Dampfturbine in der GuD-Anlage teilweise kompensiert werden.

Die gleiche Zielsetzung verfolgt der Wärmetauscher für die Gasturbinen-Brenngasvorwärmung, indem über das ECO-Wasser die Wärme für die Brenngasvorwärmung aus dem Rohgas gezogen wird.

Die Erfindung wird beispielhaft anhand der Zeichnungen näher erläutert. Es zeigen schematisch und nicht maßstäblich:
- FIG 1: eine GuD-Anlage mit vorgeschalteter Vergasungseinrich- tung,
- FIG 2: die Rohgasaufbereitung der erfinderischen Vergasungs- einrichtung und
- FIG 3: den Wasser-/Dampfkreislauf in der Vergasungseinrich- tung.

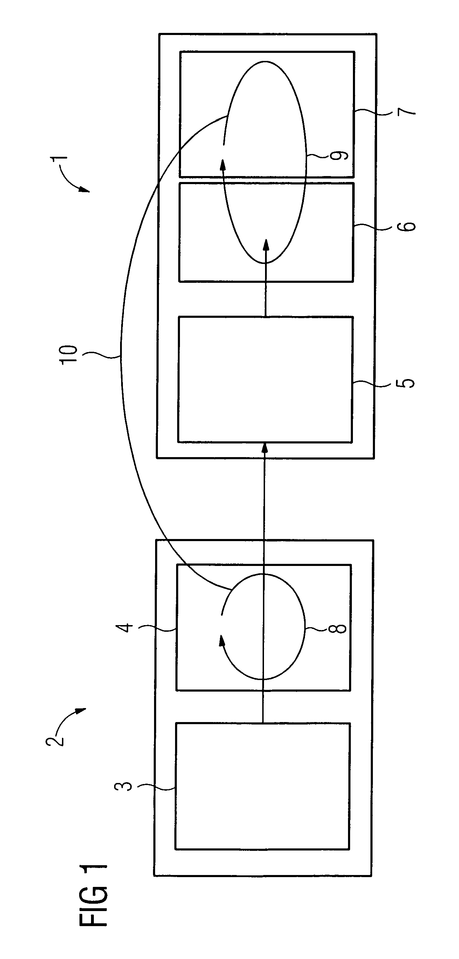

Die FIG 1 zeigt schematisch und beispielhaft eine aus dem Stand der Technik bekannte IGCC-Anlage, d.h. eine GuD-Anlage 1 mit vorgeschalteter Brennstoffvergasung in einer Vergasungseinrichtung 2. Ein fossiler Brennstoff wird in einem Vergaser 3 unterstöchiometrisch zu Rohgas vergast, welches in einer Rohgasaufbereitung 4 gekühlt, gereinigt, konvertiert und für die Verbrennung in einer Gasturbine 5 konditioniert wird. Die den einzelnen Aufbereitungsschritten zugeordneten Komponenten sind über eine Gasleitung 11 verbunden. Die Abwärme der Gasturbine 5 wird in einem der Gasturbine nachgeschalteten Abhitzekessel 6 zur Erzeugung von Wasserdampf verwendet. Der Dampf wird anschließend in einer Dampfturbine 7 entspannt. In den im Stand der Technik beschriebenen IGCC-Anlagen werden die Stoffströme 8,9 zwischen der Vergasungseinrichtung 2 (Vergaser 3 und Rohgasaufbereitung 4) und der GuD-Anlage 1 üblicherweise ausgetauscht 10, um einerseits einen hohen Gesamtanlagenwirkungsgrad (z B. durch Überhitzung der Sattdampfströme) und zum anderen Kosteneinsparungen (z. B. durch Wegfall der Luftverdichter für eine Luftzerlegungsanlage) zu erzielen.

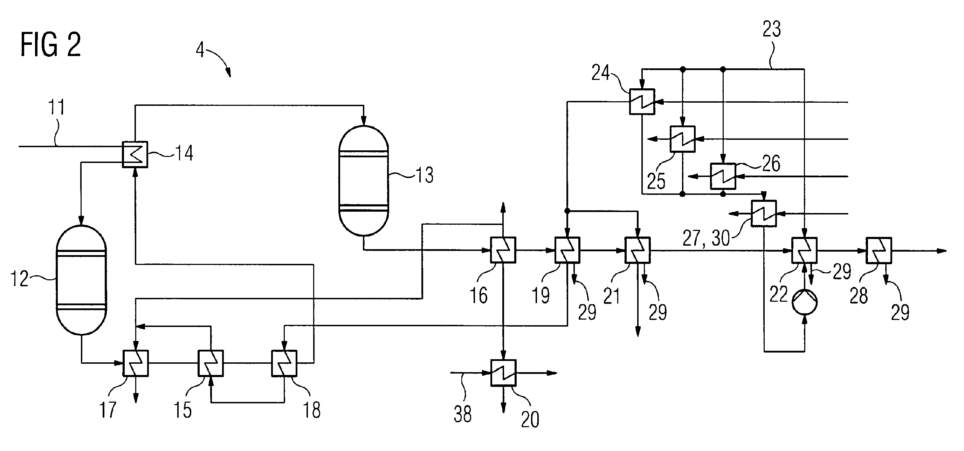

FIG 2 zeigt die Rohgasaufbereitung der erfinderischen Vergasungseinrichtung für fossilen Brennstoff. Nach dem Vergasen des fossilen Brennstoffs zu Rohgas und nach dem Quenchen des Rohgases zur Herabsetzung der Temperatur auf ein definiertes Niveau, falls erforderlich, dem Filtern zum Entfernen der trockenen Partikel und dem Waschen zum Entfernen von festen Partikeln und Alkalisalzen (Venturi-Wäsche) gelangt das Rohgas über eine Gasleitung 11 in eine erste CO-Shift-Stufe 12 (Hochtemperatur-Shift-Stufe), in der Kohlenmonoxid und Wasser bei hohen Temperaturen von 300-500 °C in Wasserstoff und Kohlendioxid überführt werden. Das Reaktionsschema der Gleichgewichtsreaktion lautet:

CO + H₂O ↔ CO₂ + H₂

Die Reaktion ist exotherm.

Zur Beschleunigung der Reaktion und zur Verringerung der Aktivierungsenergie läuft die Reaktion an einem Katalysator bei Temperaturen von ca. 200-500 °C ab. Bei höherer Temperatur liegt eine schnelle Kinetik aber ein ungünstiges chemisches Gleichgewicht vor. Bei niedrigen Temperaturen ist das Gleichgewicht stärker auf der rechten Seite des Reaktionsschemas, aber die Kinetik nimmt ab. Die Shift-Reaktion wird daher meist zweistufig in einer Hochtemperatur- 12 und einer Niedertemperatur-Shift-Stufe 13 durchgeführt.

Ein Rohgas/Rohgas-Wärmetauscher 14, der primärseitig zwischen die beiden Shift-Stufen 12 und 13 und sekundärseitig vor die erste Shift-Stufe geschaltet ist sorgt für die Erhöhung der Temperatur des Rohgases vor der ersten Shift-Stufe 12 und die Verringerung der Temperatur des Rohgases vor der zweiten Shift-Stufe 13.

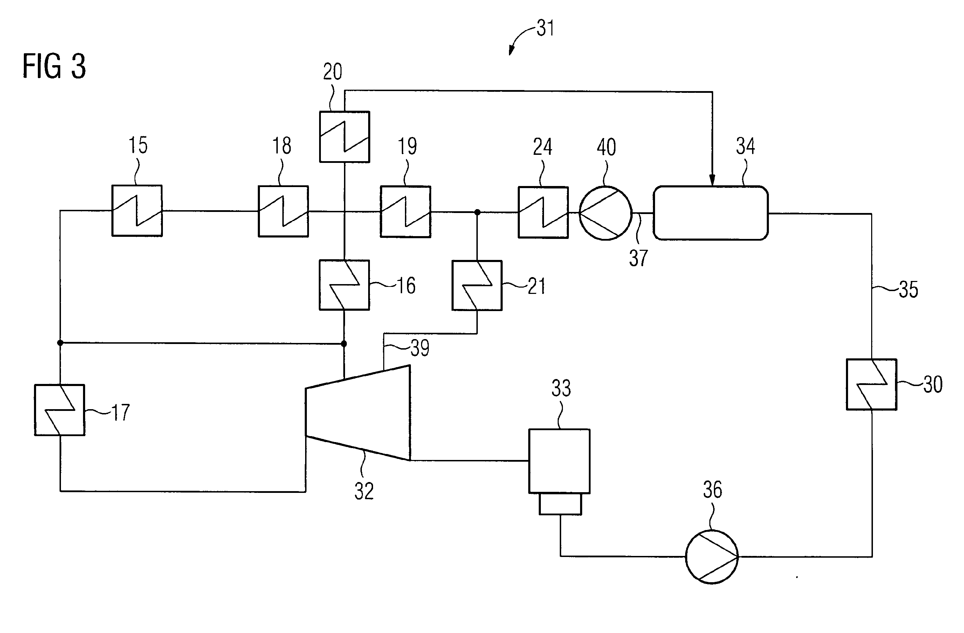

In Strömungsrichtung des Rohgases hinter der ersten CO-Konvertierungsstufe 12 ist ein erster Verdampfer 15 geschaltet. Ein zweiter Verdampfer 16 ist in Strömungsrichtung des Rohgases hinter die zweite CO-Konvertierungsstufe 13 geschaltet. Der im zweiten Verdampfer erzeugte Dampf wird entweder zur Stromerzeugung einer Dampfturbine 32 (s. FIG 3) zugeführt oder als Prozessdampf verwendet.

Im Ausführungsbeispiel der FIG 2 ist in Strömungsrichtung eines Rohgases hinter der ersten CO-Konvertierungsstufe 12 und vor dem ersten Verdampfer 15 ein Überhitzer 17 geschaltet. Der dort überhitzte Dampf wird zur Stromerzeugung einer Dampfturbine 32 (s. FIG 3) zugeführt.

Der erste Verdampfer 15 und der optionale zweite Verdampfer 16 können HD- oder MD-Verdampfer sein, und der Überhitzer 17 kann ein HD- oder MD-Überhitzer sein.

Weiterhin zeigt das Ausführungsbeispiel der FIG 2 einen in Strömungsrichtung eines Rohgases hinter den ersten Verdampfer 15 geschalteten HD-Speisewasservorwärmer (oder HD-ECO) 18. Dieser ist, selbst wenn der erste Verdampfer 15 ein HD-Verdampfer ist, optional, da er auf der einen Seite einen Wirkungsgradvorteil bringt, auf der anderen Seite aber auch zusätzliche Kosten verursacht.

In Strömungsrichtung des Rohgases ist ein MD-Speisewasservorwärmer (ECO) 19 hinter den zweiten Verdampfer 16 bzw. bei nur einer CO-Konvertierungsstufe 12 hinter den ersten Verdampfer 15 geschaltet.

Ein Teil des MD-ECO Wassers wird genutzt, um das Gasturbinen-Brenngas auf die erforderliche Temperatur aufzuwärmen.

Hierzu ist der MD-Speisewasservorwärmer 19 sekundärseitig, in Strömungsrichtung eines Speisewassers, einem Brenngasvorwärmer 20 vorgeschaltet. Das teilabgekühlte Speisewasser wird wieder in einen Speisewasserbehälter zurückgeleitet (siehe FIG 3) und kann damit den optional erforderlichen Entgasungsdampfbedarf reduzieren.

In Strömungsrichtung des Rohgases ist ein ND-Verdampfer 21 hinter den MD-Speisewasservorwärmer 19 geschaltet.

Der im ND-Verdampfer 21 erzeugte ND-Dampf wird über eine Zweiteinspeisung 39 einer Dampfturbine 32 zugeführt (siehe FIG 3), wobei das dieselbe Turbine sein kann, die mit MD-Dampf gespeist wird, oder eine Überströmleitung zu einer ND-Turbine. Alternativ kann der ND-Dampf auch als Prozessdampf verwendet werden.

Eine kostengünstige Lösung zur Einbindung der anfallenden Kondensationswärme des auskondensierenden Wasserdampfanteils im Rohgas bei gleichzeitiger maximaler Nutzung des zur Verfügung stehenden Temperaturniveaus ist der Kreislaufwasserwärmetauscher 22, der zum Erwärmen eines Kreislaufwassers primärseitig hinter den ND-Verdampfer 21 und sekundärseitig in einen Wasserkreislauf 23 geschaltet ist.

Wie in FIG 2 gezeigt, wird das erwärmte Kreislaufwasser genutzt, um Speisewasser vorzuwärmen, indem in den Wasserkreislauf 23 ein Speisewasserwärmetauscher 24 geschaltet ist. Mit einem Quenchwasserwärmetauscher 25 wird Quenchwasser bestehend aus Rohgaskondensat und Zusatzwasser vorgewärmt. Aufsättigerwasser für die Brenngasaufsättigung wird über einen in den Wasserkreislauf 23 geschalteten Aufsättigerwasserwärmetauscher 26 vorgewärmt.

In FIG 2 sind Speisewasserwärmetauscher 24, Quenchwasserwärmetauscher 25 und Aufsättigerwasserwärmetauscher 26 parallel geschaltet. Diesen nachgeschaltet ist ein Kondensatwärmetauscher 27,30, um erforderlichenfalls GuD-Kondensat bzw. Turbinenkondensat vorzuwärmen.

In Strömungsrichtung eines Rohgases ist außerdem ein Rohgaskühler 28 hinter den Kreislaufwasserwärmetauscher 22 geschaltet.

MD-Speisewasservorwärmer (ECO) 19, ND-Verdampfer 21, Kreislaufwasserwärmetauscher 22 und Rohgaskühler 28 weisen jeweils einen Ausgang 29 für ein Rohgaskondensat auf.

FIG 3 zeigt den Wasser-/Dampfkreislauf 31 der Vergasungseinrichtung 2. Er umfasst eine Dampfturbine 32 und einen der Dampfturbine 32 nachgeschalteten Kondensator 33.

Der Wasser-/Dampfkreislauf 31 umfasst weiterhin einen Speisewasserbehälter 34, der eingangsseitig über eine Leitung 35, in die eine Kondensatpumpeneinheit 36 und ein Kondensatwärmetauscher 30 geschaltet sind, mit Kondensat aus dem Kondensator 33 bespeisbar ist. Der Speisewasserbehälter 34 ist über eine Leitung 37, in die eine Speisewasserpumpe 40 geschaltet ist, an den Speisewasserwärmetauscher 24 angeschlossen, der sekundärseitig in den Wasserkreislauf 23 (s. FIG 2) geschaltet ist.

Ein Teil des vorgewärmten Speisewassers wird im ND-Verdampfer 21 verdampft und der Dampfturbine 32 über eine Zweiteinspeisung 39 zur Stromerzeugung zugeführt. Alternativ wird der ND-Dampf als Prozessdampf verwendet (nicht gezeigt). Ein weiterer Teil des vorgewärmten Speisewassers wird im MD-Speisewasservorwärmer 19 weiter erwärmt.

Ein erster Teil des im MD-Speisewasservorwärmer 19 erwärmten Speisewassers wird im zweiten Verdampfer 16 verdampft und zur Stromerzeugung oder als Prozessdampf (nicht gezeigt) verwendet. Ein zweiter Teil wärmt im Brenngasvorwärmer 20 das konditionierte Brenngas für die Verbrennung in der Gasturbine vor und fließt dann teilweise abgekühlt zurück in den Speisewasserbehälter 34. Ein dritter Teil fließt durch den optionalen HD-Speisewasservorwärmer 18 (ECO), wird im HD- oder MD-Verdampfer 15 verdampft und optional im Überhitzer 17 überhitzt und der Dampfturbine 32 zugeführt.

## Patentansprüche

1. Eine Vergasungseinrichtung (2) für fossilen Brennstoff, umfassend einen Vergaser (3), eine vom Vergaser (3) abzweigende Gasleitung (11) und eine in die Gasleitung (11) geschaltete Rohgasaufbereitung (4), **dadurch gekennzeichnet, dass** ein Wasser-/Dampfkreislauf (31) zum Zweck des Wärmetauschs in die Rohgasaufbereitung (4) geschaltet ist.

2. Die Vergasungseinrichtung (2) nach Anspruch 1, wobei der Vergaser (3) ein Flugstromvergaser mit Wasserquench ist.

3. Die Vergasungseinrichtung (2) nach Anspruch 1 oder 2, weiter umfassend eine Dampfturbine (32), die in den Wasser-/Dampfkreislauf (31) geschaltet ist.

4. Die Vergasungseinrichtung (2) nach einem der vorhergehenden Ansprüche, wobei in Strömungsrichtung eines Rohgases hinter einer ersten CO-Konvertierungsstufe (12) ein erster Verdampfer (15) geschaltet ist und hinter einer optionalen zweiten CO-Konvertierungsstufe (13) ein zweiter Verdampfer (16) geschaltet ist.

5. Die Vergasungseinrichtung (2) nach Anspruch 4, wobei in Strömungsrichtung eines Rohgases hinter der ersten CO-Konvertierungsstufe (12) und vor dem ersten Verdampfer (15) ein Überhitzer (17) geschaltet ist.

6. Die Vergasungseinrichtung (2) nach Anspruch 5, wobei der erste und zweite Verdampfer (15,16) HD- oder MD-Verdampfer sind und der Überhitzer (17) ein HD- oder MD-Überhitzer ist.

7. Die Vergasungseinrichtung (2) nach Anspruch 4, wobei der erste Verdampfer (15) ein HD-Verdampfer ist und in Strömungsrichtung eines Rohgases hinter den ersten Verdampfer (15) ein HD-Speisewasservorwärmer (HD-ECO) (18) geschaltet ist.

8. Die Vergasungseinrichtung (2) nach Anspruch 4, wobei in Strömungsrichtung eines Rohgases ein MD-Speisewasservorwärmer (ECO) (19) hinter den zweiten Verdampfer (16) bzw. bei nur einer CO-Konvertierungsstufe (12) hinter den ersten Verdampfer (15) geschaltet ist.

9. Die Vergasungseinrichtung (2) nach Anspruch 8, wobei der MD-Speisewasservorwärmer (19) sekundärseitig, in Strömungsrichtung eines Speisewassers, einem vom Speisewasser primärseitig durchströmbaren Brenngasvorwärmer (20) vorgeschaltet ist, damit ein Brenngas mit Speisewasser auf eine erforderliche Temperatur aufwärmbar ist.

10. Die Vergasungseinrichtung (2) nach Anspruch 8, wobei in Strömungsrichtung eines Rohgases ein ND-Verdampfer (21) hinter den MD-Speisewasservorwärmer (19) geschaltet ist.

11. Die Vergasungseinrichtung (2) nach Anspruch 10, wobei in Strömungsrichtung eines Rohgases ein Kreislaufwasserwärmetauscher (22) zum Erwärmen eines Kreislaufwassers primärseitig hinter den ND-Verdampfer (21) und sekundärseitig in einen Wasserkreislauf (23) geschaltet ist.

12. Die Vergasungseinrichtung (2) nach Anspruch 11, wobei in Strömungsrichtung eines Rohgases ein Rohgaskühler (28) hinter den Kreislaufwasserwärmetauscher geschaltet ist.

13. Die Vergasungseinrichtung (2) nach Anspruch 11, wobei in den Wasserkreislauf (23) ein Speisewasserwärmetauscher (24) geschaltet ist.

14. Die Vergasungseinrichtung (2) nach Anspruch 11 oder 13, wobei in den Wasserkreislauf (23) ein Quenchwasserwärmetauscher (25) geschaltet ist.

15. Die Vergasungseinrichtung (2) nach einem der Ansprüche 11, 13 oder 14, wobei in den Wasserkreislauf (23) ein Aufsättigerwasserwärmetauscher (26) geschaltet ist.

16. Die Vergasungseinrichtung (2) nach einem der Ansprüche 11, 13, 14 oder 15, wobei in den Wasserkreislauf (23) ein Kondensatwärmetauscher (27,30) geschaltet ist.

17. Die Vergasungseinrichtung (2) nach den Ansprüchen 13 bis 16, wobei der Speisewasserwärmetauscher (24), der Quenchwasserwärmetauscher (25) und der Aufsättigerwasserwärmetauscher (26) parallel geschaltet sind und der Kondensatwärmetauscher (27,30) diesen in Strömungsrichtung des Kreislaufwassers nachgeschaltet ist.

18. Eine GuD-Anlage (1) mit vorgeschalteter Vergasungseinrichtung (2) für fossilen Brennstoff gemäß einem der vorhergehenden Ansprüche, wobei die Gasleitung (11) in eine Brennkammer eines Gasturbinenkraftwerksteils der GuD-Anlage (1) mündet.

19. Die GuD-Anlage (1) nach Anspruch 18, wobei eine konditioniereinrichtung für ein Synthesegas in die Gasleitung (11) geschaltet ist.

20. Die GuD-Anlage (1) nach einem der Ansprüche 18 oder 19, wobei eine Vorwärmeinrichtung für das Synthesegas in die Gasleitung (11) geschaltet ist.
